# FASCICULE DE BREVET EUROPEEN

(11) **EP 2 665 636 B1**
(45) Date de publication et mention de la délivrance du brevet: **08.07.2015**
(21) Numéro de dépôt: 11815524.1
(22) Date de dépôt: 22.12.2011
(51) Int. Cl.: B62D 25/20

(54) **LIAISON ENTRE LE LONGERON INTERIEUR ET LE LONGERONNET AVANT DE LA CAISSE D'UN VEHICULE AUTOMOBILE ET VEHICULE AINSI EQUIPE**
VERBINDUNG ZWISCHEN DEM INNENSEITENELEMENT UND ZUSÄTZLICHEM FRONTLÄNGSTRÄGERELEMENT DER KAROSSERIE EINES KRAFTFAHRZEUGS UND FAHRZEUG DAMIT
CONNECTION BETWEEN THE INNER SIDE MEMBER AND THE FRONT AUXILIARY LONGITUDINAL MEMBER OF THE BODY SHELL OF A MOTOR VEHICLE, AND VEHICLE COMPRISING SAME

(30) Priorité: 18.01.2011 FR 1150398
(43) Date de publication de la demande: 27.11.2013
(73) Titulaire: Peugeot Citroën Automobiles SA, 78140 Vélizy Villacoublay (FR)
(72) Inventeur: PICQUET, Christophe, F-78180 Montigny Le Bretonneux (FR)
(74) Mandataire: Fosse, Danièle
(86) Numéro de dépôt international: PCT/FR2011/053156
(87) Numéro de publication internationale: WO 2012/098312

(56) Documents cités:
- DE-A1- 19 954 575
- JP-A- 58 128 967
- US-A1- 2004 183 340

## Description

La présente invention concerne la caisse d'un véhicule automobile et en particulier la liaison entre le longeron intérieur s'étendant sous chacun des deux côtés d'habitacle de la caisse et le longeronnet avant s'étendant à l'arrière du longeron intérieur. JP 58128967 décrit une telle caisse.

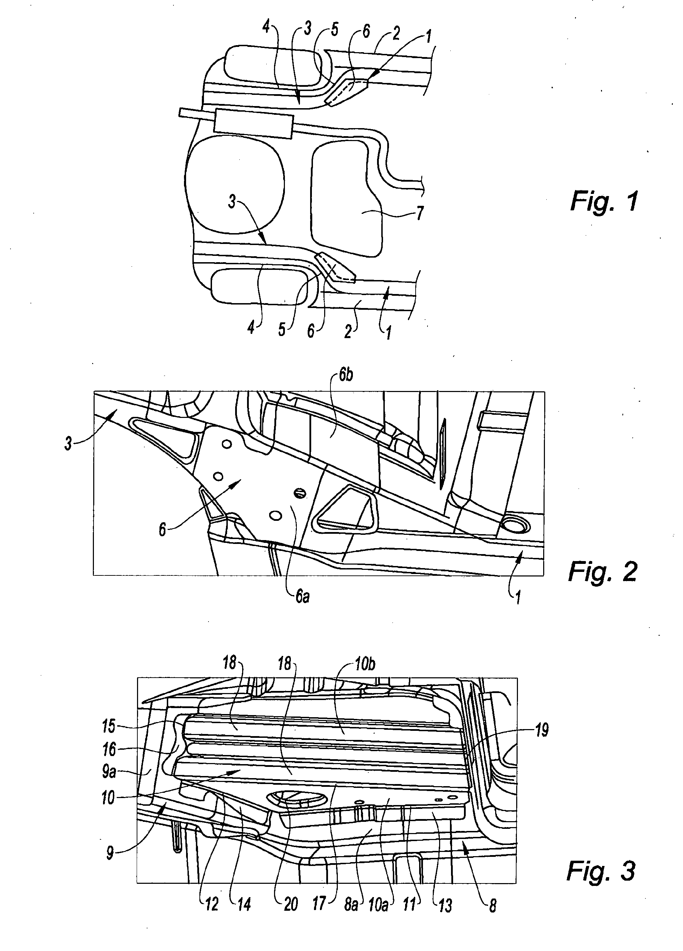

La figure 1 montre le dessous de la partie arrière d'un véhicule automobile.

On voit sur cette figure que la caisse du véhicule comprend un longeron intérieur 1 s'étendant sous chacun des deux côtés d'habitacle 2.

Ce longeron intérieur 1 est prolongé vers l'arrière par un longeronnet avant 3 s'étendant près d'un passage de roue 4.

Le longeronnet 3 forme un coude 5 dans la zone située devant le passage de roue 4.

Par ailleurs, la partie arrière du longeron intérieur 1 est reliée à la partie avant du longeronnet avant 4 par une pièce de liaison 6 en tôle.

Cette pièce de liaison 6 est représentée sur la vue en perspective à échelle agrandie de la figure 2.

Cette pièce de liaison 6 comporte une face inférieure 6a et une face latérale 6b.

L'accostage entre la partie arrière du longeron intérieur 1 et la pièce de liaison 6 et entre la partie avant du longeronnet avant 4 et cette pièce de liaison 6 est actuellement réalisé sur la face inférieure du longeron 1 et du longeronnet 4.

La pièce de liaison 6 renforce la liaison entre le longeronnet 4 et le longeron 1 et permet à celle-ci de résister aux efforts qu'elle subit en cas de choc arrière.

En cas de choc arrière à grande vitesse, cette liaison entre le longeronnet 4 et le longeron intérieur 1 subit un effort de compression qui peut atteindre 8 tonnes.

Actuellement, pour réaliser la pièce de liaison 6 on utilise une tôle d'épaisseur égale à 1,8 mm.

Malgré cette forte épaisseur, on constate qu'en cas de choc arrière à grande vitesse, cette pièce de liaison 6 se déforme.

Cette déformation de la pièce de liaison 6 présente un risque car elle peut défoncer le réservoir de carburant 7 qui est situé à proximité de la pièce de liaison 6.

Le but de la présente invention est de remédier à cet inconvénient.

Ce but est atteint, selon l'invention, grâce à la structure de la caisse d'un véhicule automobile comprenant un longeron intérieur s'étendant sous chacun des deux côtés d'habitacle de la caisse, ce longeron intérieur étant prolongé vers l'arrière par un longeronnet avant formant un coude avec le longeron intérieur, la partie arrière du longeron intérieur étant reliée à la partie avant du longeronnet avant par une pièce de liaison en tôle comportant une face inférieure et une face latérale intérieure, caractérisée en ce que le bord de la face inférieure de ladite pièce de liaison comprend un premier et un second rebords pliés sensiblement perpendiculairement à ladite face qui sont appliqués et fixés respectivement sur la face latérale intérieure de la partie arrière du longeron intérieur et sur la face latérale intérieure de la partie avant du longeronnet avant, le bord de la face latérale intérieure de ladite pièce de liaison comportant un troisième rebord plié qui est appliqué et fixé sur la face latérale intérieure de la partie avant du longeronnet avant.

Ainsi, les accostages de la pièce de liaison sur le longeron intérieur et sur le longeronnet avant sont réalisés grâce à des rebords pliés qui sont appliqués respectivement sur la face latérale intérieure du longeron intérieur et sur la face latérale intérieure du longeronnet avant.

Les essais ont permis de constater que de tels accostages permettaient à cette pièce de liaison de mieux résister aux efforts de compression engendrés en cas de choc arrière à grande vitesse.

De plus, grâce à de tels accostages la pièce de liaison peut être réalisée dans une tôle d'épaisseur inférieure à celle évoquée plus haut, ce qui permet de diminuer la masse de la pièce et par conséquent la masse totale du véhicule.

Dans un mode de réalisation préféré de l'invention, la face inférieure de la pièce de liaison est sensiblement en forme de triangle, l'hypoténuse de ce triangle étant formée par le pli de liaison entre ladite face inférieure et ladite face latérale intérieure de la pièce dë liaison et les deux côtés opposés à cette hypoténuse comportant respectivement le premier et le second rebords pliés.

De préférence également, la face latérale intérieure de la pièce de liaison comporte des nervures embouties s'étendant entre les bords avant et arrière de cette face latérale intérieure.

Ces nervures embouties s'étendent ainsi sensiblement dans la direction des efforts de compression engendrés en cas de choc arrière et permettent ainsi à la pièce de liaison de mieux résister à ces efforts.

Dans une version préférée de l'invention, lesdits premier et second rebords de la pièce de liaison sont soudés respectivement à la face latérale intérieure de la partie arrière du longeron intérieur et à la face latérale intérieure de la partie avant du longeronnet avant et ledit troisième rebord est soudé à la face latérale intérieure de la partie avant du longeronnet avant.

Selon une autre particularité avantageuse de l'invention, la face intérieure de la pièce de liaison comporte un évidement.

Cet évidement permet notamment d'alléger la pièce de liaison sans pour autant diminuer sa résistance aux efforts de compression.

Selon un autre aspect, l'invention concerne également un véhicule automobile comportant une structure de caisse selon l'invention, telle que définie plus haut.

D'autres particularités et avantages de l'invention apparaîtront encore tout au long de la description ci-après.

Aux dessins annexés, donnés à titre d'exemples, non limitatifs :
- la figure 3 est une vue en perspective montrant la pièce de liaison comprise entre l'arrière du longeron intérieur et l'avant du longeronnet avant d'une caisse de véhicule automobile selon l'invention.

La figure 3 représente partiellement un longeron intérieur 8 et un longeronnet avant 9 en tôle emboutie et formant chacun un corps creux de section transversale sensiblement rectangulaire.

Comme dans le cas de la figure 1, le longeron intérieur 8 s'étend sous l'un des deux côtés d'habitacle de la caisse et le longeronnet 9 s'étend vers l'arrière.

La partie avant du longeronnet 9 présente un coude pour contourner un passage de roue, comme montré sur la figure 1.

Comme dans le cas des figures 1 et 2, la partie arrière du longeron intérieur 8 est reliée à la partie avant du longeronnet avant 9 par une pièce de liaison 10 en tôle comportant une face inférieure 10a et une face latérale intérieure 10b sensiblement perpendiculaires l'une à l'autre.

Conformément à l'invention, les bords 11, 12 de la face inférieure 10a de la pièce de liaison 10 comprennent respectivement un premier rebord 13 et un second rebord 14, tous deux pliés sensiblement perpendiculairement à la face 10a qui sont appliqués et fixés par soudure respectivement sur la face latérale intérieure 8a de la partie arrière du longeron intérieur 8 et sur la face latérale intérieure 9a de la partie avant du longeronnet avant 9.

Par ailleurs, le bord arrière 15 de la face latérale intérieure 10b de la pièce de liaison 10 comporte un troisième rebord 16 plié qui est appliqué et fixé par soudure sur la face latérale intérieure 9a de la partie avant du longeronnet avant 9.

Dans l'exemple représenté sur la figure 3, la face inférieure 10a de la pièce de liaison 10 est sensiblement en forme de triangle.

L'hypoténuse de ce triangle est formée par le pli de liaison 17 entre la face inférieure 10a et la face latérale intérieure 10b de la pièce de liaison 10 et les deux côtés 11, 12 opposés à cette hypoténuse comportent respectivement le premier et le second rebords pliés 13, 14.

La figure 3 montre également que les rebords 13, 14, 16 s'étendent sur pratiquement toute la longueur des bords correspondants 11, 12, 15 de la pièce de liaison 10.

Par ailleurs, la figure 3 montre que la face latérale intérieure 10b de la pièce de liaison 10 comporte des nervures embouties 18 s'étendant entre les bords avant et arrière 19, 15 de cette face latérale intérieure 10b.

Ces nervures 18 renforcent la résistance de la pièce 10 aux efforts de compression engendrés lors d'un choc arrière.

En outre, la face inférieure 10a de la pièce de liaison 10 comporte un évidement 20 qui permet notamment de réduire la masse de la pièce de liaison 10, sans diminuer sa résistance aux efforts de compression précités.

Les essais ont montré qu'en cas de choc arrière à grande vitesse, la pièce de liaison 10 était capable de résister à des efforts de compression de l'ordre de 8 tonnes, sans subir de déformation excessive.

On évite ainsi tout risque que la déformation de cette pièce de liaison 10 n'atteigne le réservoir à carburant situé à proximité de cette pièce.

Cette remarquable performance de la pièce de liaison 10 a été obtenue avec une tôle d'épaisseur égale à 1,17 mm moindre que celle du longeronnet avant 9 dont l'épaisseur était égale à 1,8 mm.

Cette réduction d'épaisseur de la tôle de la pièce de liaison 10 permet de diminuer la masse de cette pièce et par conséquent la masse totale du véhicule, ce qui permet de réduire la consommation de celui-ci.

Les performances ci-dessus de la pièce de liaison 10 s'expliquent principalement par le fait que celle-ci est accostée par les rebords pliés 13, 14, 16 aux faces latérales intérieures 8a, 9a du longeron intérieur 8 et du longeronnet 9.

Secondairement, ces performances s'expliquent également par les nervures longitudinales 18 présentes sur la face 10b de la pièce de liaison 10.

## Revendications

1. Caisse d'un véhicule automobile comprenant un longeron intérieur (8) s'étendant sous chacun des deux côtés d'habitacle de la caisse, ce longeron intérieur (8) étant prolongé vers l'arrière par un longeronnet avant (9) formant un coude avec le longeron intérieur (8), la partie arrière du longeron intérieur (8) étant reliée à la partie avant du longeronnet avant (9) par une pièce de liaison (10) en tôle comportant une face inférieure (10a) et une face latérale intérieure (10b), **caractérisé en ce que** le bord (11, 12) de la face inférieure (10a) de ladite pièce de liaison (10) comprend un premier et un second rebords (13, 14) pliés sensiblement perpendiculairement à ladite face (10a) qui sont appliqués et fixés respectivement sur la face latérale intérieure (8a) de la partie arrière du longeron intérieur (8) et sur la face latérale intérieure (9a) de la partie avant du longeronnet avant (9), le bord (15) de la face latérale intérieure (10b) de ladite pièce de liaison (10) comportant un troisième rebord plié (16) qui est appliqué et fixé sur la face latérale intérieure (9a) de la partie avant du longeronnet avant (9).

2. Caisse selon la revendication 1, **caractérisée en ce que** la face inférieure (10a) de la pièce de liaison (10) est sensiblement en forme de triangle, l'hypoténuse de ce triangle étant formée par le pli de liaison (17) entre ladite face inférieure (10a) et ladite face latérale intérieure (10b) de la pièce de liaison (10) et les deux côtés (11, 12) opposés à cette hypoténuse comportant respectivement le premier et le second rebords pliés (13, 14).

3. Caisse selon l'une des revendications 1 ou 2, **caractérisée en ce que** la face latérale intérieure (10b) de la pièce de liaison (10) comporte des nervures embouties (18) s'étendant entre les bords avant et arrière de cette face latérale intérieure (10b).

4. Caisse selon l'une des revendications 1 à 3, **caractérisée en ce que** lesdits premier et second rebords (13, 14) de la pièce de liaison (10) sont soudés respectivement à la face latérale intérieure (8a) de la partie arrière du longeron intérieur (8) et à la face latérale intérieure (9a) de la partie avant du longeronnet avant (9) et ledit troisième rebord (16) est soudé à la face latérale intérieure (9a) de la partie avant du longeronnet avant (9).

5. Caisse selon l'une des revendications 1 à 4, **caractérisée en ce que** la face inférieure (10a) de la pièce de liaison (10) comporte un évidement (20).

6. Véhicule automobile comportant une caisse selon l'une des revendications 1 à 5.

## Patentansprüche

1. Wagenkasten eines Kraftfahrzeugs, einen inneren Längsträger (8) umfassend, der sich unter jeder der beiden Innenraumseiten des Wagenkastens erstreckt, wobei dieser innere Längsträger (8) durch einen vorderen Rumpfholm (9) nach hinten verlängert wird, der mit dem inneren Längsträger einen Knick bildet, wobei der hintere Abschnitt des inneren Längsträgers (8) durch ein Verbindungsstück (10) aus Blech mit dem vorderen Abschnitt des vorderen Rumpfholms (9) verbunden ist, das eine Unterseite (10a) und eine innere Seitenfläche (10b) umfasst, **dadurch gekennzeichnet, dass** der Rand (11, 12) der Unterseite (10a) des besagten Verbindungsstücks (10) eine erste und eine zweite Stoßkante (13, 14) umfasst, die in etwa senkrecht zur besagten Fläche (10a) gebogen sind, und die jeweils auf der inneren Seitenfläche (8a) des hinteren Abschnitts des inneren Längsträgers (8) und auf der inneren Seitenfläche (9a) des vorderen Abschnitts des vorderen Rumpfholms (9) angebracht und befestigt sind, wobei der Rand (15) der inneren Seitenfläche (10b) des besagten Verbindungsstücks (10) eine dritte gebogene Stoßkante (16) umfasst, die auf der inneren Seitenfläche (9a) und dem vorderen Abschnitt des vorderen Rumpfholms (9) angebracht und befestigt ist.

2. Wagenkasten nach Anspruch 1, **dadurch gekennzeichnet, dass** die Unterseite (10a) des Verbindungsstücks (10) in etwa die Form eines Dreiecks aufweist, wobei die Hypotenuse dieses Dreiecks durch die Verbindungskrümmung (17) zwischen der besagten Unterseite (10a) und der besagten inneren Seitenfläche (10b) des Verbindungsstücks (10) gebildet wird, und die beiden Seiten (11, 12), die gegenüber dieser Hypotenuse liegen, jeweils die erste und die zweite gebogene Stoßkante (13, 14) umfassen.

3. Wagenkasten nach einem der Ansprüche 1 oder 2, **dadurch gekennzeichnet, dass** die innere Seitenfläche (10b) des Verbindungsstücks (10) tiefgezogene Rippen (18) umfasst, die sich zwischen dem vorderen und dem hinteren Rand dieser inneren Seitenfläche (10b) erstrecken.

4. Wagenkasten nach einem der Ansprüche 1 bis 3, **dadurch gekennzeichnet, dass** die besagte erste und zweite Stoßkante (13, 14) des Verbindungsstücks (10) jeweils an die innere Seitenfläche (8a) des hinteren Abschnitts des inneren Längsträgers (8) und an die innere Seitenfläche (9a) des vorderen Abschnitts des vorderen Rumpfholms (9) geschweißt ist und die besagte dritte Stoßkante (16) an die innere Seitenfläche (9a) des vorderen Abschnitts des vorderen Rumpfholms (9) geschweißt ist.

5. Wagenkasten nach einem der Ansprüche 1 bis 4, **dadurch gekennzeichnet, dass** die Unterseite (10a) des Verbindungsstücks (10) eine Aussparung (20) umfasst.

6. Kraftfahrzeug, einen Wagenkasten nach einem der Ansprüche 1 bis 5 umfassend.

## Claims

1. Motor-vehicle body comprising an internal longitudinal member (8) extending under each of the two passenger-compartment sides of the body, this internal longitudinal member (8) being extended rearwards by a front auxiliary longitudinal member (9) forming an elbow with the internal longitudinal member (8), the rear part of the internal longitudinal member (8) being connected to the front part of the front auxiliary longitudinal member (9) by a connecting part (10) made from sheet metal comprising a bottom face (10a) and an internal lateral face (10b), **characterised in that** the edge (11, 12) of the bottom face (10a) of said connecting part (10) comprises first and second rims (13, 14) folded substantially perpendicular to said face (10a), which are applied and fixed respectively to the internal lateral face (8a) of the rear part of the internal longitudinal member (8) and to the internal lateral face (9a) of the front auxiliary longitudinal member (9), the edge (15) of the internal lateral face (10b) of said connecting part (10) comprising a third folded rim (16) that is applied and fixed to the internal lateral face (9a) of the front part of the front auxiliary longitudinal member (9).

2. Body according to claim 1, **characterised in that** the bottom face (10a) of the connecting part (10) is substantially in the form of a triangle, the hypotenuse of this triangle being formed by the connecting fold (17) between said bottom face (10a) and said internal lateral face (10b) of the connecting part (10) and the two sides (11, 12) opposite to this hypotenuse comprising respectively the first and second folded rims (13, 14).

3. Body according to one of claims 1 or 2, **characterised in that** the internal lateral face (10b) of the connecting part (10) comprises pressed ribs (18) extending between the front and rear edges of this internal lateral face (10b).

4. Body according to one of claims 1 to 3, **characterised in that** said first and second rims (13, 14) of the connecting part (10) are welded respectively to the internal lateral face (8a) of the rear part of the internal longitudinal member (8) and to the internal lateral face (9a) of the front part of the front auxiliary longitudinal member (9) and said third rim (16) is welded to the internal lateral face (9a) of the front part of the front auxiliary longitudinal member (9).

5. Body according to one of claims 1 to 4, **characterised in that** the bottom face (10a) of the connecting part (10) comprises a recess (20).

6. Motor vehicle comprising a body according to one of claims 1 to 5.
